**Europäisches Patentamt**

**European Patent Office**

**Office européen des brevets**

(19)

(11) Veröffentlichungsnummer: **0 208 959**
A1

# (12) EUROPÄISCHE PATENTANMELDUNG

(21) Anmeldenummer: 86108636.1

(22) Anmeldetag: 25.06.86

(51) Int. Cl.⁴: **H 04 M 11/02**

(30) Priorität: 05.07.85 DE 3524094

(43) Veröffentlichungstag der Anmeldung: **21.01.87**
**Patentblatt 87/4**

(84) Benannte Vertragsstaaten: AT CH DE FR IT LI

(71) Anmelder: **Blaupunkt-Werke GmbH, Robert-Bosch-Strasse 200, D-3200 Hildesheim (DE)**

(72) Erfinder: **Noetzel, Günter, Dipl.-Ing., Trockener Kamp 31, D-3200 Hildesheim (DE)**

(74) Vertreter: **Eilers, Norbert, Dipl.-Phys., Blaupunkt-Werke GmbH Robert-Bosch-Strasse 200, D-3200 Hildesheim (DE)**

(54) **Nachrichtensystem.**

(57)  Es wird ein Nachrichtensystem für Wohnhäuser mit einer Türsprechanlage (10) und mit Steuersignalen für eine Türklingel (18) und den Türöffner (16) beschrieben. Als einziger Nachrichtenweg wird die bereits vorhandene Antennenanlage ausgenutzt, deren Antennenkabel (26) in alle Wohnungen führt.

Das Nachrichtensystem besitzt eine allen Wohnungen gemeinsame Zentrale (22) zur Steuerung bzw. Herstellung der jeweiligen Sprechverbindungen. Über das als einzigen Nachrichtenweg vorgesehene Antennenkabel werden neben den Sprechsignalen noch digitale Steuerbefehle übertragen, die zur Auswahl und Steuerung der jeweils benötigten Sprechverbindung dienen, und die darüberhinaus noch andere elektrische Größen, beispielsweise für eine Ablesung der Heizungskosten oder für einen Alarm bei einem Brand in einer Wohnung, beinhalten können.

ACTORUM AG

R 1872 0208959

Nachrichtensystem

Die Erfindung betrifft ein Nachrichtensystem zur Übertragung von Daten und Nachrichten zu bzw. von einer
oder mehreren Empfangsstationen, insbesondere für
Wohnhäuser oder dgl..

Es sind bereits eine Vielzahl von Nachrichtensystemen
bekannt, die jedoch für den Fall, daß die zugehörigen
Empfangsstationen nicht nur allein zum reinen Empfang eingerichtet sind, sondern auch ihrerseits Nachrichten aussenden sollen, sehr aufwendig und kostenintensiv gestaltet sind.

Als ein typisches Beispiel eines zur Rede stehenden
Nachrichtensystems können die vor allem in großen
Wohnhäusern befindlichen Anlagen betrachtet werden,
die neben der Betätigung der Türklingel bzw. des Türöffners auch noch ein Wechselsprechen oder Gegensprechen zwischen einer Wohnung und der äußeren Haupteingangstür des Wohnhauses ermöglichen.

Bei diesen bekannten Systemen müssen für die Türsprechanlage und für die Türklingel und den Türöffner für
jede Wohnung Einzelkabel zur Haupteingangstür verlegt
werden. Bei großen Wohnhäusern mit vielen Wohnungen
ergibt sich dabei ein erheblicher Installationsaufwand mit entsprechend hohen Kosten.

Außerdem sind etwaige Reparaturarbeiten - beispielsweise bei einem Kabelbruch - sehr umständlich durchzuführen. Schließlich läßt sich ein nachträglicher
Einbau einer solchen Anlage in ein bereits bestehendes
Wohnhaus wegen der umfangreichen Verkabelung kaum
wirtschaftlich realisieren.

Es ist auch schon ein Nachrichtensystem für Krankenhäuser bekannt (DE-OS 2 233 797), um den Patienten
die Möglichkeit zu geben, im Bedarfsfall das Pflegepersonal zu rufen. Dabei sind den einzelnen Betten
bzw. Zimmereinheiten jeweils unterschiedliche Kennfrequenzen als "Adresse" zugeordnet, so daß hier im
Prinzip auf eine Vielzahl von Einzelleitungen verzichtet und ein entsprechend breitbandiges Kabel

0208959

für den Nachrichtenweg verwendet werden kann. Allerdings ist dann der Einsatz von vielen Filtern sowie von teuren Sendern und Empfängern erforderlich.

Der Erfindung liegt die Aufgabe zugrunde, die voranstehend erwähnten Nachteile, die vor allem den erheblichen kostenintensiven Aufwand betreffen, zu beseitigen und ein Nachrichtensystem zu schaffen, welches nur ein Kabel für den Nachrichtenweg benötigt, ohne das aufwendige Filter oder dgl. erforderlich sind.

Die Lösung dieser Aufgabe erfolgt bei dem im Oberbegriff des Anspruchs 1 genannten Nachrichtensystem dadurch, daß für die gleichzeitige Übertragung digitaler Daten einerseits und analoger Signale andererseits ein gemeinsamer Nachrichtenweg vorgesehen ist, und daß die Steuerung bzw. Auswahl der analogen Nachrichtenverbindung durch digitale Daten erfolgt.

Anknüpfend an das eingangs beschriebene Beispiel einer Anlage in einem Wohnhaus geht die Erfindung zunächst davon aus, daß über den Nachrichtenweg zum einen Steuersignale bzw. Steuerbefehle - wie für die Türklingel oder für den Türöffner - und zum anderen Kommunikationssignale - Gegen- oder Wechselsprechen von einer Wohnung zur Außentür und umgekehrt - übertragen werden.

Entsprechend dieser Aufteilung werden die Steuerbefehle als digitale Signale und die Kommunikationssignale für das Sprechen als analoge Signale übertragen, wobei in zweckmäßiger Ausgestaltung für die
digitalen Signale ein unteres Frequenzband bis 50 Hz
verwendet wird, während die analogen Signale in einem
höheren Frequenzband etwa zwischen 5 und 6 MHz vorgesehen sind.

Ein bedeutsamer Vorteil der Erfindung liegt darin,
daß es möglich ist, für den Nachrichtenweg das allgemein in Wohnhäusern bereits vorhandene Antennenkabel auszunutzen. Das Antennenkabel führt nämlich
bereits zu allen Wohnungen, so daß insofern eine
nachträgliche Installation entfallen kann. Es ist
gegebenenfalls lediglich noch erforderlich, eine
einziges Antennenkabel zur Außentür zu verlegen,
wo sich die Klingelknöpfe, der Türöffner und die
Türsprechanlage befinden.

Die einzelnen Empfangsstationen lassen sich ohne weiteres
über Weichen an das vorhandene Antennenkabel anschließen, so daß der eigentliche Rundfunk- und Fernsehempfang
durch die zusätzliche Ausnutzung des Antennenkabels
für den Nachrichtenweg nicht beeinträchtigt wird.
Selbstverständlich ist es aber auch möglich, für
das erfindungsgemäße Nachrichtensystem ein eigenes
einziges Koax-Kabel zu verlegen. Der Installationsaufwand ist dabei erheblich geringer, als bei der
Verlegung einer Vielzahl von Einzelkabeln.

In zweckmäßiger Ausgestaltung der Erfindung ist allen
Empfangsstationen gemeinsam eine Zentrale zugeordnet,
welche  die jeweils gewünschte Nachrichtenverbindung
herstellt und welche dafür sorgt, daß jeweils nur
eine Sprechverbindung besteht. Ein Mithören ist dadurch ausgeschaltet.

Die bei der Erfindung vorgesehene Aufteilung von Übertragung digitaler Daten für Steuerbefehle einerseits
und von analogen Signalen für das Sprechen andererseits wird in besonders vorteilhafter Weise konsequent
ausgenutzt und weiterentwickelt, indem  der digitale
Datenkanal für die Übertragung von Befehlen ausgenutzt wird, welche die Steuerung und die Auswahl eines
gerade benötigten analogen Kanals zur Herstellung einer
Sprechverbindung bewerkstelligen, wobei für alle Empfangsstationen bzw. für alle Wohnungen ein einziger
Analogkanal ausreicht.

Die Belegung des gerade benötigten analogen Sprechkanals wird in zweckmäßiger Ausgestaltung durch
Mikroprozessoren gesteuert, indem die Sender und
Empfänger des Gegensprechkanals vom Mikroprozessor
ein- bzw. ausgeschaltet werden können. Die Mikroprozessoren tauschen Informationen über die Belegung der Analogkanäle untereinander aus, und zwar
in neuartiger Weise über den für die digitalen Steuersignale genutzten Digitalkanal. Eine ansonsten mögliche gleichzeitige Benutzung und Belegung des analogen
Sprechkanals wird dadurch vermieden. Von Bedeutung ist
hierbei, daß die Übertragung der digitalen Daten
einerseits und der analogen Signale andererseits gleichzeitig über einen einzigen Nachrichtenweg erfolgen
kann.

Ein weiterer Vorteil, den die Erfindung bietet, besteht darin, daß der digitale Kanal auch ausgenutzt
werden kann, um weitere Daten wie beispielsweise den
elektrisch zu erfassenden Wert der verbrauchten Wärmemenge einer Heizungsanlage in der Wohnung zu übertragen. Denkbar ist auch die Übertragung eines Alarmsignals bei Ausbruch von Feuer oder bei starker Rauchentwicklung in einer Wohnung. Eine weitere Möglichkeit
besteht in der Anwendung einer Notruftaste, durch welche
der Wohnungsinhaber sofort eine Zentrale oder einen
Hausmeister erreichen kann.

In vorteilhafter Ausgestaltung der Erfindung kann an die
zentrale Steuereinheit ein Drucker angeschlossen werden,
und dadurch ist es möglich, eingehende Daten auszudrucken
und festzuhalten. So lassen sich beispielsweise nacheinander alle Wohnungen nach den verbrauchten Heizwerten
abfragen, wobei diese Werte dann auf einem Protokollstreifen ausgedruckt sind. Auch etwaige Notrufe können
mit Uhrzeit und Datum versehen festgehalten werden.

Andere vorteilhafte Ausgestaltungen und Weiterbildungen
der Erfindung sind den Unteransprüchen zu entnehmen und
in der Zeichnung dargestellt.

Nachfolgend wird die Erfindung anhand des in der Zeichnung dargestellten Ausführungsbeispiels näher erläutert.
Es zeigen:

Fig. 1          ein Prinzip-Blockschaltbild
                eines Nachrichtensystems in einem Wohnhaus,

Fig. 2    ein detaillierteres Blockschaltbild eines Nachrichtensystems gemäß Fig. 1, und

Fig. 3    ein Frequenzspektrum zur Verdeutlichung der für die Nachrichtenübertragung verwendeten
Frequenzbereiche.

Das gezeigte Nachrichtensystem ist für ein nicht näher dargestelltes Wohnhaus ausgelegt, an dessen zentralen äußeren
Haupteingangstür eine Außentürbedientafel 10 vorgesehen
ist. Diese umfaßt in üblicher Weise ein Mikrofon 12 sowie
einen Lautsprecher 14 um einen Sprechkontakt mit einer
gewünschten Wohnung herstellen zu können, wobei sowohl
ein Gegensprechen als auch ein Wechselsprechen  möglich
ist.

Die Außentürbedientafel 10, die bezüglich des Nachrichtensystems auch eine Empfangsstation darstellt, besitzt ferner einen Türöffner 16 sowie den einzelnen Wohnungen zugeordnete Klingelknöpfe 18. Wesentlicher Bestandteil des
Nachrichtensystems ist eine Zentrale 22, die zweckmäßiger
Weise im Keller des Wohnhauses untergebracht ist. Über
eine Verbindung 20 ist die Außentürbedientafel 10 an die
Zentrale 22 angeschlossen. Da  sich die Zentrale 22 räumlich

0208959

- 9 -

gesehen in geringer Entfernung von der Außentürbedientafel 10 anordnen läßt, können für die Verbindung 20 n Einzelleitungen verwendet werden, wobei n die Anzahl der Wohnungen 32 angibt. Es ist aber auch möglich, für die Verbindung 20 ein breitbandiges Koax - Kabel zu verwenden.

Die Zentrale 22 steht über die Antennenkabel 26 in Verbindung mit allen Wohnungen 32, wobei in vorteilhafter Weise das an sich bereits vorhandene Antennenkabel 26 verwendet werden kann, welches in Wohnhäusern bereits vorgesehen ist und über einen gemeinsamen Verstärker 28 zu einer Gemeinschaftsantenne 30 führt.

Um die ursprüngliche Funktion des Antennenkabels 26 nicht zu beeinflussen, sind die einzelnen Empfangsstationen 38 in den Wohnungen 32 über Weichen 34 an das Antennenkabel 26 angeschlossen. Dies gilt auch für die Zentrale 22, die über eine Weiche 24 in Verbindung mit dem Antennenkabel 26 steht.

Durch die Weichen 24 und 34 ist gewährleistet, daß nur ein vorbestimmtes unteres Frequenzband von der Zentrale 22 und den Empfangsstationen 38 belegt werden kann, während das darüber liegende höhere Frequenzband nach wie

0208959

vor für den Rundfunk- und Fernsehempfang ausgenutzt werden kann. An die Antennensteckdose 36 können also ohne Beeinträchtigungen Rundfunk- und Fernsehgeräte angeschlossen werden.

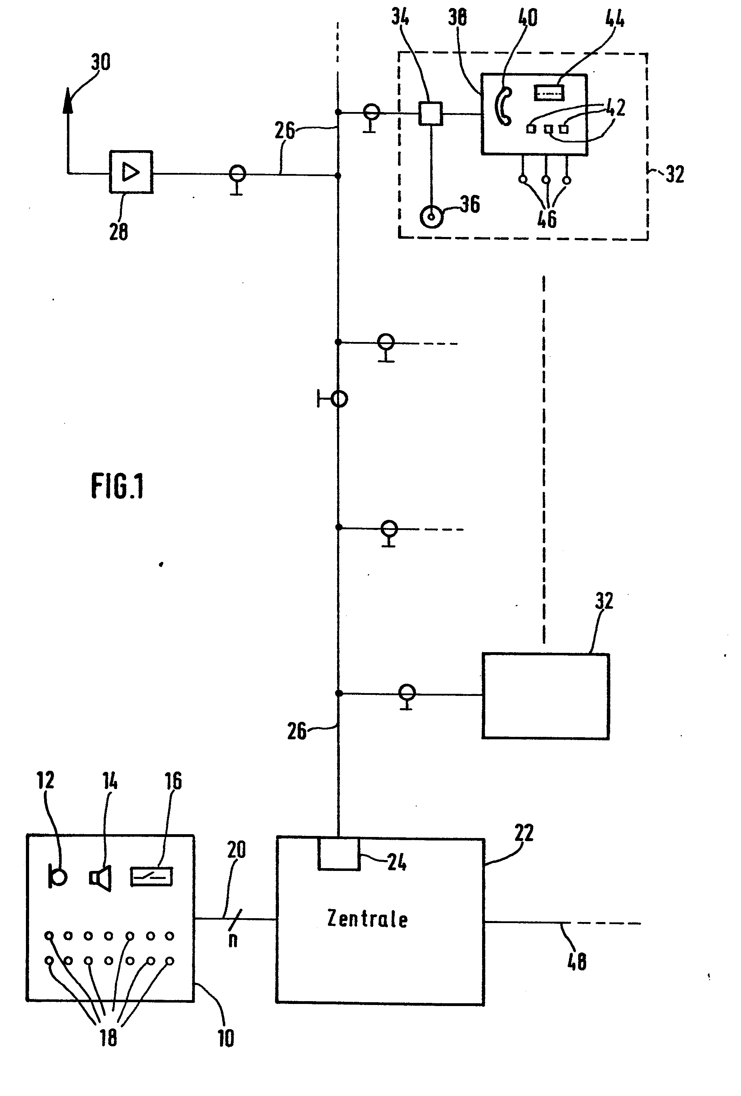

Jeder Wohnung 32 ist eine Empfangsstation 38 zugeordnet, wobei alle Empfangsstationen 38 in Verbindung mit der Zentrale 22 stehen. Wie Fig. 1 zeigt, umfaßt eine Empfangsstation 38 einen Telefonhörer 40 für eine Sprechverbindung sowie Tasten 42 zur Auslösung bestimmter Befehle, beispielsweise zur Betätigung des Türöffners 16.

Weiterhin kann noch eine Anzeigevorrichtung 44 vorgesehen werden, und schließlich kann die Empfangsstation 38 auch noch Meßwerteingänge 46 besitzen, denen elektrische Signale zuführbar sind. Solche elektrischen Signale können Heizwertgrößen bilden, um ein automatisches Ablesen der verbrauchten Wärmemenge zu ermöglichen. Weitere denkbare Signalgrößen können von einem Feuer- oder Rauchmelder stammen, um gegebenenfalls einen automatischen Alarm auszulösen, wenn in der Wohnung 32 ein Brand entsteht.

In Fig. 1 ist an die Zentrale 22 noch eine Verbindungsleitung 48 angeschlossen, die gegebenenfalls zu einer

- 11 -

weiteren Zentrale eines benachbarten Wohnhauses bei größeren Wohnkomplexen führen kann. Über die Verbindungsleitung 48 können auch Alarmmeldungen zu einer externen Zentrale übertragen werden.

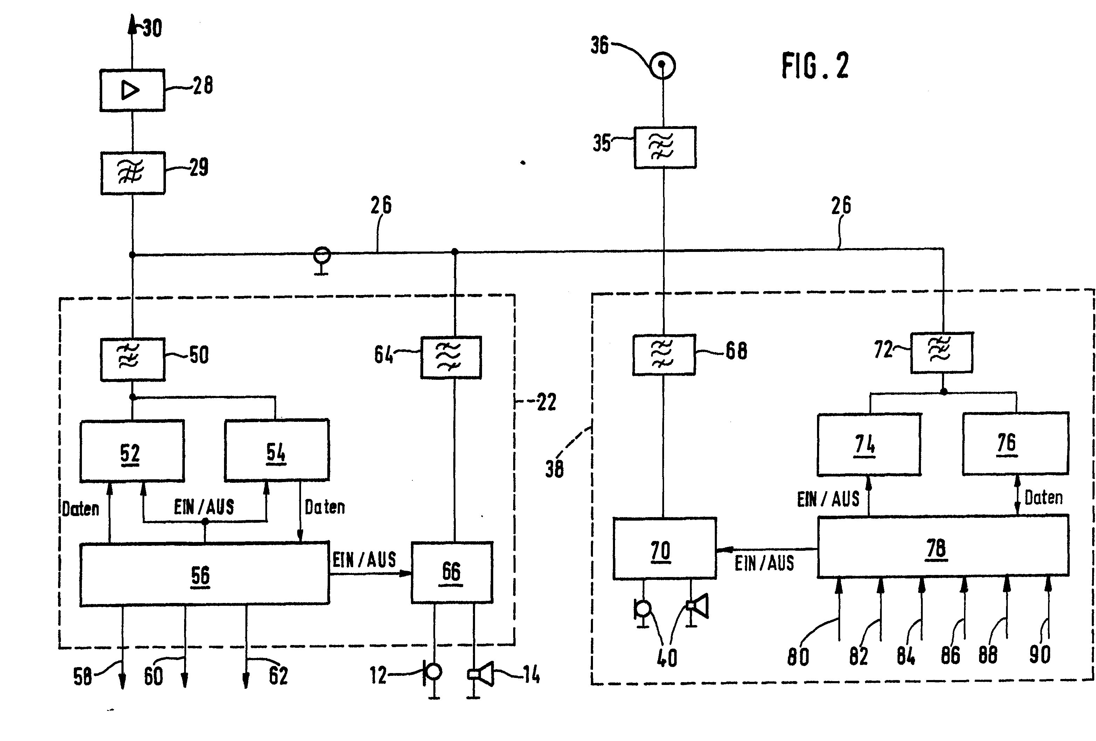

Fig. 2 zeigt in einer detaillierteren Darstellung ein Prinzip-Blockschaltbild des Nachrichtensystems mit einer Zentrale 22, die einer Vielzahl von Empfangsstationen zugeordnet ist, von denen hier nur eine Empfangsstation 38 dargestellt ist.

Es wird wieder von einer bereits vorhandenen Gemeinschaftsantenne 30 ausgegangen, von welcher über den Verstärker 28 und einen Hochpass 29 über das Antennenkabel 26 eine Verbindung zu allen Wohnungen bzw. Empfangsstationen 38 besteht.

An den Hochpass 29 schließt sich bei der Zentrale 22 ein Tiefpass 50 an, welcher zusammen mit einem ebenfalls in der Zentrale 22 befindlichen Bandpaß 64 die weiter oben schon beschriebene Weiche 24 bildet. Der Tiefpaß 50 läßt lediglich einen unteren Frequenzbereich für die digitale Signalübertragung durch, während der Bandpaß 64 gewährleistet, daß lediglich die analogen Sprechsignale passieren und zu einem Sender/Empfänger 66 gelangen können.

Durch den Hochpaß 29 wird erreicht, daß ein unterer Frequenzbereich von beispielsweise bis zu 8 Mhz von der Antenne 30 abgekoppelt ist, so daß die ursprüngliche Funktion des Antennenkabels 26 als Empfangskabel für den Rundfunk- und Fernsehempfang mit den höheren Frequenzen nicht beeinträchtigt wird.

An den Tiefpaß 50 schließen sich in der Zentrale 22 ein Datensender/Modulator 52 sowie ein Datenempfänger/Demodulator 54 an, die zur Übertragung von Daten jeweils mit einer zentralen Steuereinheit 56 verbunden sind. Letztere kann durch einen Mikroprozessor CPU 6502 gebildet sein.

An die zentrale Steuereinheit 56 sind Einzelleitungen 58, 60 und 62 angeschlossen, die zur Außentürbedientafel 10 (vgl. Fig. 1) führen, und über welche Signale für den Türöffner, für die Türklingel und auch weitere mögliche Sondersignale (z.B. Heizkostenmessung) geführt werden.

Der Bandpaß 64, welcher den Frequenzbereich für die analogen Sprachsignale passieren läßt, ist mit dem Sender/Empfänger 66 verbunden, an welchen das Mikrofon 12 und der Lautsprecher 14 der Außentürbedientafel 10 angeschlossen sind.

0208959

Wenn nur ein Gegensprechen vorgesehen ist, arbeitet der Sender/Empfänger 66 beispielsweise mit einer Trägerfrequenz von 5 MHz, während beim Gegensprechen zwei Träger von 5 MHz und 6 MHz vorgesehen sind.

Ähnlich wie bei der Zentrale 22 besitzt jede Empfangsstation 38 einen mit dem Antennenkabel 26 verbundenen Bandpaß 68 und einen Tiefpaß 72, die zusammen mit dem zur Antennensteckdose 36 führenden Hochpaß 35 die oben schon erwähnte Weiche 34 bilden.

An den Bandpaß 68 schließt sich ein Sender/Empfänger 70 an, welcher mit einem Mikrofon und einem Lautsprecher für den Telefonhörer 40 (vgl. Fig. 1) verbunden ist.

Im Anschluß an den Tiefpaß 72 folgen ein Datensender/ Modulator 74 sowie ein Datenempfänger/Demodulator 76 für den analogen Sprechkanal. Daran angeschlossen ist eine Auswerteschaltung 78 mit Eingängen für Einzelleitungen 80 - 90. Für die Auswerteschaltung 78 läßt sich ein Mikroprozessor vom Typ 6805 (Motorola) verwenden.

Über die Einzelleitungen 80 - 90 werden der Auswerteschaltung 78 spezielle Signale für den digitalen Kanal

- 14 -

0208959

zugeführt, wie die Signale für den Türöffner oder für die Herstellung einer Sprechverbindung (vgl. Tasten 42 in Fig. 1). Ferner können auch Sondersignale, z.B. von einem Alarmknopf oder elektrische Signale für die Heizkostenmessung usw. der Auswerteschaltung 78 zugeführt werden.

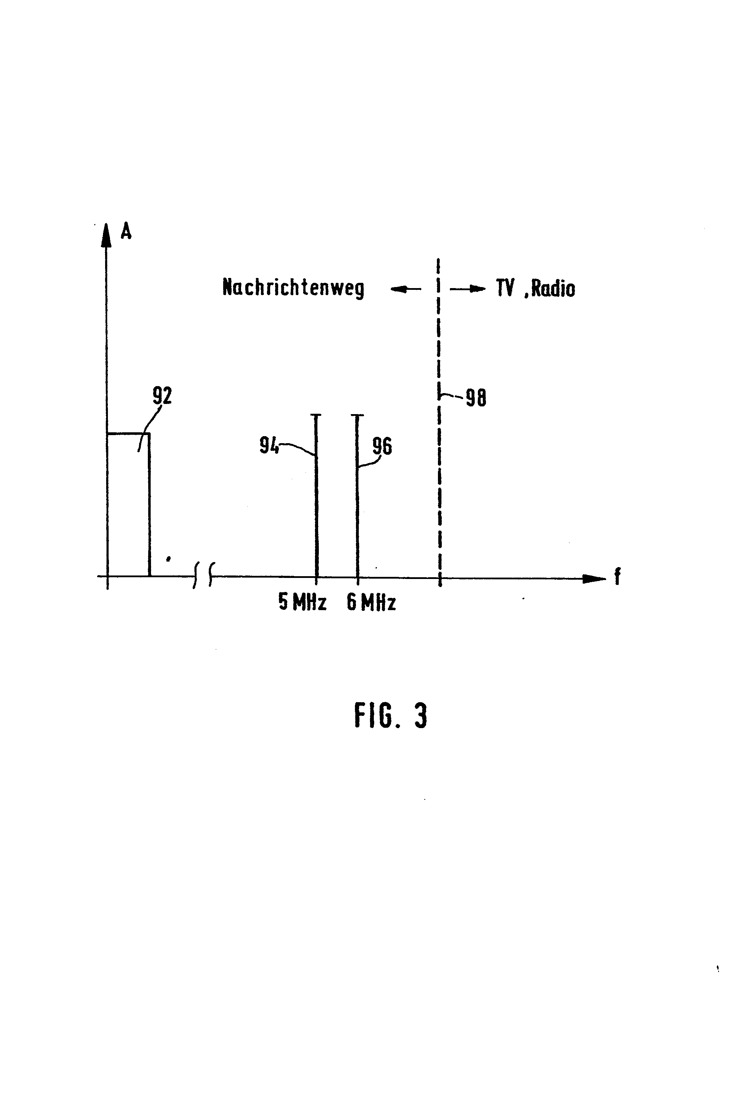

Fig. 3 zeigt die für den Nachrichtenweg zur Verfügung stehenden Frequenzbereiche des Antennenkabels 26. Durch die gestrichelt gezeichnete Linie 98 ist die durch die Weichen 24 und 34 in Fig. 1 hervorgerufene "Trennung" bzw. Aufteilung verdeutlicht. In dem unteren Frequenzbereich links neben der Linie 98 liegt der Nachrichtenweg für das Nachrichtensystem, während rechts von der Linie der Frequenzbereich für die eigentliche Funktion des Antennenkabels für den Rundfunk- und für den Fernsehempfang angeordnet ist.

Die Bezugsziffer 92 gibt den Frequenzbereich für den digitalen Datenkanal an, und mit 94 und 96 sind die Trägerfrequenzen für den Sprechkanal beim Gegensprechen bezeichnet.

Übrigens erfolgt über die Antennenleitung 26 auch die Gleichstromversorgung für die Empfangsstationen 38, für

0208959

die Zentrale 22 sowie für die Außentürbedientafel 10.

Über das einzige Antennenkabel 26, welches meistens in den Wohnhäusern schon vorhanden ist, können bei dem erfindungsgemäßen Nachrichtensystem alle nötigen Informationen und Daten übertragen werden. Von Bedeutung sind vor allem das Gegen- oder Wechselsprechen von einer Wohnung 32 zur Außentür und umgekehrt sowie die Übertragung von Steuerbefehlen für die Türklingel oder für den Türöffner 16. Diesen Steuerbefehlen ist ein digitaler Datenkanal zugeordnet, der gleichzeitig auch der Systemsteuerung dient und zudem noch zur zusätzlichen Übertragung von anderen Daten - Alarm, Feuer, Rauchmeldung, Heizkostenablesung - verwendet werden kann. Für das Sprechen wird dagegen ein Analogkanal verwendet, der für alle Wohnungen 32 gleich ist. Die Belegung dieses Analogkanals wird durch die Zentrale 22 gesteuert, indem die Sender/Empfänger 66 und 70 von der zentralen Steuereinheit 56 bzw. von der Auswerteschaltung 78 ein- bzw. ausgeschaltet werden.

Die zentrale Steuereinheit 56 und die Auswerteschaltung 78 tauschen die Information über die Belegung des Analogkanals untereinander über den oben schon erwähnten auch für die Digitaldaten genutzten Digitalkanal aus,

0208959

wodurch "Konflikte" durch eine sonst mögliche gleichzeitige Benutzung des Analogkanals vermieden werden.

Die Steuerbefehle für das komplette Nachrichtensystem lassen sich in einfacher Weise durch entsprechende Programme für die Mikroprozessoren (zentrale Steuereinheit 56 und Auswerteschaltung 78) realisieren. Vorteilhaft ist ein von der Zentrale 22 gesteuertes an sich bekanntes Abfrageverfahren, bei dem jede Wohnung 32 bzw. jede Empfangsstation 38 durch Zuteilung einer Adresse individuell gekennzeichnet ist. Die Zentrale 22 beginnt jeden Transfer (Datenaustausch) mit der Ausgabe einer Wohnungsadresse, an die sich ein Befehlscode anschließt, auf welchen die angesprochene Empfangsstation 38 reagiert.

Der Befehlscode kann eine sogenannte Statusabfrage der Empfangsstation 38 (liegt ein Alarmfall vor oder besteht ein Gegensprechwunsch usw.) oder eine Steueranweisung (Betätigung der Türklingel, Einschalten der Gegensprechverbindung, Erfassen von Meßdaten für die Heizkosten usw.) beinhalten.

Die Steuerbefehle werden durch das Programm in dem Mikroprozessor erzeugt und über dessen Ein-/Ausgabeschnittstelle als serielles Impulsmuster ausgegeben. Für die Anpassung an das Antennenkabel 26 sind lediglich ein Datenmodulator 52 bzw. ein Datendemodulator 54 sowie zum Einkoppeln des modulierten Signals eine Weiche erforderlich.

Die Belegung des analogen Sprechkanals wird über die digitalen Daten im Digitalkanal für jeweils einen Sender und für die berechtigten Empfänger freigegeben, und die anfallenden Steueraufgaben werden ebenfalls im Digitalkanal übertragen. Dies bietet den Vorteil eines geringen Bandbreitenbedarfs des Nachrichtensystems. Außerdem ist der Steuerkanal nur dann belegt, wenn entweder Steuerdaten übertragen werden oder die Belegung des Kommunikationskanals (Sprechkanal) geändert werden soll. In der übrigen Zeit kann der digitale Kanal somit für andere Zwecke - z.B. Datentransfer für Heizwerte oder andere Funktionen - benutzt werden.

Insgesamt ermöglicht die Erfindung einen relativ einfachen Aufbau der benötigten Sender und Empfänger innerhalb der Wohnungen 32, was damit zusammen hängt, daß die Steuerbefehle im digitalen Kanal zur Steuerung der Sender und Empfänger mit ausgenutzt werden, und daß nur eine Trägerfrequenz bzw. nur ein analoger Kanal für alle Wohnungen 32 gemeinsam benutzt wird.

<u>P a t e n t a n s p r ü c h e</u>

1. Nachrichtensystem zur Übertragung von Daten und Nachrichten zu bzw. von einer oder mehreren Empfangsstationen, insbesondere für Wohnhäuser oder dergleichen,
dadurch gekennzeichnet,
daß für die gleichzeitige Übertragung digitaler Daten einerseits und analoger Signale andererseits ein gemeinsamer Nachrichtenweg (26) vorgesehen ist und daß die Steuerung bzw. Auswahl der analogen Nachrichtenverbindung durch digitale Daten erfolgt.

2. Nachrichtensystem nach Anspruch 1,
dadurch gekennzeichnet,
daß der Nachrichtenweg (26) durch ein übliches zu den Empfangsstationen (38) führendes Koax-Antennenkabel gebildet ist.

3. Nachrichtensystem nach Anspruch 1 und/oder 2,
dadurch gekennzeichnet,
daß eine allen Empfangsstationen (38) gemeinsame Zentrale (22) vorgesehen ist, welche eine als Mikroprozessor ausgebildete zentrale Steuereinheit (56) umfaßt.

4. Nachrichtensystem nach einem der vorhergehenden Ansprüche 1 - 3,
dadurch gekennzeichnet,
daß die Zentrale (22) und die Empfangsstationen (38) über eine Weiche (24; 34) mit dem Nachrichtenweg (26) verbunden sind.

...

5.   Nachrichtensystem nach Anspruch 3 und/oder 4,

dadurch gekennzeichnet,

daß die zentrale Steuereinheit (56) Eingänge (58 – 62) für den Empfang von den einzelnen Empfangsstationen (38) zugeordneten Steuerbefehlen besitzt und daß jeder Empfangsstation (38) eine eigene Adresse zugeordnet ist.

6.   Nachrichtensystem nach Anspruch 5,

dadurch gekennzeichnet,

daß die zentrale Steuereinheit (56) zur zeitlich nacheinander erfolgenden Abfrage alle angeschlossenen Empfangsstationen (38) eingerichtet ist, und daß jeweils nur ein analoger Signalweg zur Verfügung gestellt wird.

7.   Nachrichtensystem nach einem der vorhergehenden Ansprüche 1 – 6,

dadurch gekennzeichnet,

daß jede Empfangsstation (38) eine Auswerteschaltung (78) zum Empfang von elektrischen Signalgrößen (80 – 90) besitzt.

8.   Nachrichtensystem nach einem der vorhergehenden Ansprüche 1 – 7,

dadurch gekennzeichnet,

daß die analogen Signale mittels einer einzigen Trägerfrequenz übertragen werden (Wechselsprechen).

9.   Nachrichtensystem nach einem der vorhergehenden Ansprüche 1 – 8,

dadurch gekennzeichnet,

daß die analogen Signale mittels zweier Trägerfrequenzen (94, 96) übertragen werden (Gegensprechen).

...

10. Nachrichtensystem nach einem der vorhergehenden
    Ansprüche 1 - 9,
    dadurch gekennzeichnet,
    daß die digitalen Signale im unteren Frequenzbereich (92) von
    etwa 0 - 50 Hz übertragen werden.

0208959

FIG.1

Zentrale

FIG.2

FIG. 3

Europäisches
Patentamt

EUROPÄISCHER RECHERCHENBERICHT

0208959
Nummer der Anmeldung

EP 86 10 8636

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 032 982 (S. SIEDLER & SÖHNE)<br>* Seite 1, Zeile 5 - Seite 5, Zeile 5; Seite 6, Zeile 17 - Seite 7, Zeile 26; Seite 15, Zeilen 10-27 * | 1,2,7-9 | H 04 M 11/02 |
| Y | | 3,6 | |
| A | | 4,5,10 | |
| X | DE-B-2 165 904 (KATHREIN)<br><br>* Spalte 3, Zeilen 25-56; Spalte 5, Zeile 43 - Spalte 6, Zeile 18; Spalte 6, Zeile 46 - Spalte 8, Zeile 7 * | 1,2,4,5,7 | |
| A | | 3,8-10 | RECHERCHIERTE SACHGEBIETE (Int. Cl.4)<br><br>H 04 M<br>H 04 L |
| X | IEEE TRANSACTIONS ON CONSUMER ELECTRONICS, Band CE-29, Nr. 4, November 1983, Seiten 524-529, IEEE, New York, US; M. MURATA et al.: "A proposal for standardization of home bus system for home automation"<br>* Abschnitte 3.1-3.3; Figuren 2-4 *<br><br>-/- | 1,2,7,10 | |

Der vorliegende Recherchenbericht wurde für alle Patentansprüche erstellt.

| Recherchenort | Abschlußdatum der Recherche | Prüfer |
|---|---|---|
| DEN HAAG | 13-10-1986 | MIKKELSEN C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82

0208959
Nummer der Anmeldung

EP 86 10 8636

## EUROPÄISCHER RECHERCHENBERICHT

**Europäisches Patentamt**

Seite 2

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | Idem | 4,5,8, 9 | |
| | --- | | |
| Y | JOURNAL OF TELECOMMUNICATION NETWORKS, Band 3, Nr. 2, 1984, Seiten 103-115, Computer Science Press Inc., Rockville, Maryland, US; D.L. ESTRIN et al.: "Cable television networks as an alternative to the local loop" * Seite 107, Abschnitt 4.2 * | 3,6 | |
| | ----- | | |

**RECHERCHIERTE SACHGEBIETE (Int. Cl.4)**

Der vorliegende Recherchenbericht wurde für alle Patentansprüche erstellt.

| Recherchenort | Abschlußdatum der Recherche | Prüfer |
|---|---|---|
| DEN HAAG | 13-10-1986 | MIKKELSEN C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82